(19) Europäisches Patentamt
European Patent Office
Office européen des brevets

(11) Veröffentlichungsnummer: **0 023 315**
**A1**

# (12) EUROPÄISCHE PATENTANMELDUNG

(21) Anmeldenummer: **80104143.5**

(22) Anmeldetag: **16.07.80**

(51) Int. Cl.³: **D 06 P 1/18**
D 06 P 3/60, D 06 P 3/85

(30) Priorität: **30.07.79 DE 2930919**

(43) Veröffentlichungstag der Anmeldung:
**04.02.81 Patentblatt 81/5**

(84) Benannte Vertragsstaaten:
**AT BE CH DE FR GB IT LI LU NL SE**

(71) Anmelder: **BASF Aktiengesellschaft**
**Carl-Bosch-Strasse 38**
**D-6700 Ludwigshafen(DE)**

(72) Erfinder: **Juenemann, Werner, Dr.**
**Haidfeldweg 1C**
**D-6702 Bad Duerkheim 1(DE)**

(72) Erfinder: **Lamm, Gunther, Dr.**
**Heinrich-Heine-Strasse 7**
**D-6773 Hassloch(DE)**

(72) Erfinder: **Loeffler, Hermann**
**Haydnstrasse 23**
**D-6720 Speyer(DE)**

## (54) Verfahren zum Färben und Bedrucken von cellulosehaltigem Textilmaterial.

(57) Die Erfindung betrifft ein Verfahren zum Färben und Bedrucken von cellulosehaltigem Textilmaterial, *dadurch gekennzeichnet*, daß man als Farbstoffe Verbindungen der allgemeinen Formel I

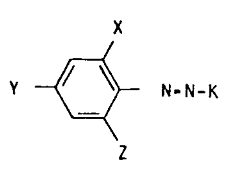 I

verwendet, in der
K ein Rest der Formel

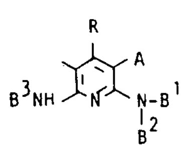 oder 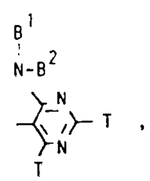 ,

einer der Reste
X oder Y eine $C_2$- bis $C_{10}$-Carbonester-, $C_3$- bis $C_{10}$-Carbonamid-, $C_4$- bis $C_{18}$-Sulfonamid-, $C_4$- bis $C_8$-Alkylsulfon-, $C_6$- bis $C_8$-Arylsulfon- oder eine Sulfonsäurearylestergruppe und die restlichen Substituenten X, Y und Z Wasserstoff, Brom oder Methyl und Y darüberhinaus auch Nitro sind, wobei
Y Cyan oder Carbamoyl,
$B^1$, $B^2$ und $B^3$ unabhängig voneinander eine aliphatischen, cycloaliphatischen, araliphatischen oder aromatischen Rest,
$N(B^1)(B^2)$ einen gesättigten heterocyclischen Rest,
R Wasserstoff oder $C_1$- bis $C_3$-Alkyl, einer der Reste
T einen Rest der Formel
$-N(B^1)(B^2)$
Wasserstoff, $C_1$- bis $C_4$-Alkyl oder Phenyl bedeuten.

EP 0 023 315 A1

Verfahren zum Färben und Bedrucken von cellulosehaltigem Textilmaterial

Die Erfindung betrifft ein Verfahren zum Färben und Bedrucken von cellulosehaltigem Textilmaterial, das dadurch gekennzeichnet ist, daß man als Farbstoffe Verbindungen der allgemeinen Formel I

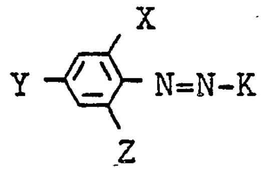

I

verwendet, in der

K ein Rest der Formel

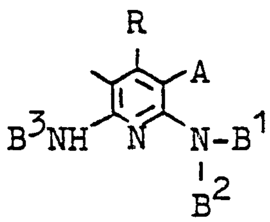

oder

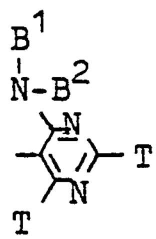

,

einer der Reste

X oder Y eine $C_2$- bis $C_{19}$-Carbonester-, $C_3$- bis $C_{19}$-Carbonamid-, $C_4$- bis $C_{18}$-Sulfonamid-, $C_4$- bis $C_8$-Alkylsulfon-, $C_6$- bis $C_8$-Arylsulfon- oder eine Sulfonsäurearylestergruppe und die restlichen Substituenten

X, Y und Z Wasserstoff, Brom oder Methyl und

Y darüberhinaus auch Nitro sind, wobei

A Cyan oder Carbamoyl,

Bg/BL

$B^1$, $B^2$ und $B^3$ unabhängig voneinander einen aliphatischen, cycloaliphatischen, araliphatischen oder aromatischen Rest,

$\underset{B^2}{\overset{|}{N}}-B^1$ einen gesättigten heterocyclischen Rest,

R Wasserstoff oder $C_1$- bis $C_3$-Alkyl, einer der Reste

T einen Rest der Formel $-\underset{B^2}{\overset{|}{N}}-B^1$ und der andere Rest T Wasserstoff, $C_1$- bis $C_4$-Alkyl oder Phenyl bedeuten.

Reste R sind neben Wasserstoff beispielsweise Äthyl, n- oder i-Propyl und vorzugsweise Methyl.

Neben Wasserstoff kommen für $B^1$ z. B. die folgenden Substituenten in Betracht: Alkyl mit 1 bis 8 C-Atomen, gegebenenfalls durch Hydroxy, Cyan, Alkoxy mit 1 bis 8 C-Atomen, Phenoxy, Phenoxyäthoxy oder Benzyloxy substituiertes $C_2$- bis $C_8$-Alkyl, Cyclohexyl, Norbornyl, Benzyl, Phenyläthyl, Phenylhydroxyäthyl, Phenylpropyl, Phenylbutyl, gegebenenfalls durch Chlor, Methyl, Trifluormethyl, Pyrrolidonyl, Methoxy oder Äthoxy substituiertes Phenyl, $C_5$- bis $C_{12}$-Polyalkoxyalkyl, $C_4$- bis $C_9$-Hydroxypolyalkoxyalkyl, $C_1$- bis $C_8$-Alkanoyloxy-$C_2$- bis $C_6$-alkyl, $C_7$- bis $C_{11}$- Aroyloxy-$C_2$- bis $C_6$-alkyl, $C_1$- bis $C_8$-Alkylaminocarbonyloxy-$C_2$- bis $C_6$-alkyl, $C_6$- bis $C_{10}$-Arylaminocarbonyloxy-$C_2$- bis $C_6$-alkyl oder $C_1$- bis $C_8$-Alkoxycarbonyl-$C_2$- bis $C_7$-alkyl sowie $C_1$- bis $C_{18}$-Alkanoyl, $C_8$- bis $C_{10}$-Aralkanoyl, $C_7$- bis $C_{11}$-Aroyl, $C_1$- bis $C_4$-Alkylsulfonyl oder $C_6$- bis $C_{10}$-Arylsulfonyl.

Als Reste $B^1$ kommen im einzelnen außer den schon genannten z. B. in Betracht:

f. gegebenenfalls substituierte Alkylreste:

$CH_3$, $C_2H_5$, n- oder i-$C_3H_7$, n- oder i-$C_4H_9$, $C_6H_{13}$, $CH_2\text{-}\underset{C_2H_5}{CH}\text{-}C_4H_9$, $(CH_2)_3OH$, $CH_2\underset{CH_3}{C}HOH$, $\underset{CH_3}{CH}\text{-}CH_2OH$, $(CH_2)_4OH$, $(CH_2)_6OH$, $\underset{CH_3}{CH}\text{-}(CH_2)_3\underset{OH}{C}(CH_3)_2$, $(CH_2)_3O(CH_2)_4OH$, $(CH_2)_2CN$, $(CH_2)_5CN$, $(CH_2)_6CN$, $(CH_2)_7CN$, $(CH_2)_2O(CH_2)_2CN$, $(CH_2)_3O(CH_2)_2CN$, $(CH_2)_2O(CH_2)_2O(CH_2)_2CN$, $(CH_2)_3OC_2H_4OCH_3$, $(CH_2)_3OC_2H_4OC_2H_5$, $(CH_2)_3O(CH_2)_6OH$, $(CH_2)_3OC_2H_4OCH(CH_3)_2$, $(CH_2)_3OC_2H_4OC_4H_9$, $(CH_2)_3OC_2H_4OCH_2C_6H_5$, $(CH_2)_3OC_2H_4OC_2H_4C_6H_5$,

$(CH_2)_3OC_2H_4O$-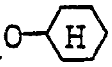 , $(CH_2)_3OC_2H_4OC_6H_5$, $(CH_2)_3O\underset{CH_3}{C}H\text{-}CH_2OCH_3$,

$(CH_2)_3O\underset{CH_3}{C}HCH_2OC_4H_9$, $(CH_2)_3O\underset{CH_3}{C}HCH_2OCH_3$, $(CH_2)_3O\underset{CH_3}{C}HCH_2OC_2H_5$, $CH_2CH_2COOH$, $(CH_2)_5COOH$, $(CH_2)_6COOH$, die entsprechenden Reste, bei denen die Gruppierungen $-O(CH_2)_2-$, $-OCH_2\underset{CH_3}{C}H-$ oder $-O\underset{CH_3}{C}H\text{-}CH_2-$ zwei- oder dreimal vorhanden sind, $CH_2CH_2OCH_3$, $CH_2CH_2OC_2H_5$, $CH_2CH_2OC_3H_7$, $CH_2CH_2OC_4H_9$, $CH_2CH_2OC_6H_5$, $(CH_2)_3OCH_3$, $(CH_2)_3OC_2H_5$, $(CH_2)_3OC_3H_7$, $(CH_2)_3OC_4H_9$, $(CH_2)_3O\underset{C_2H_5}{C}H_2CHC_4H_9$, $(CH_2)_3OC_6H_{13}$, $(CH_2)_3OC_8H_{17}$, $(CH_2)_3OCH_2C_6H_5$, $(CH_2)_3OC_2H_4C_6H_5$, $(CH_2)_3OC_6H_5$, $-\underset{CH_3}{C}HCH_2OCH_3$,

$\underset{CH_3}{C}HCH_2OC_4H_9$, $\underset{CH_3}{C}HCH_2OC_6H_5$, $\underset{CH_3}{C}HCH_2OCH_2C_6H_5$, $CH_2\underset{CH_3}{C}HOCH_3$, $CH_2\underset{CH_3}{C}H\text{-}OC_2H_5$, $CH_2\underset{CH_3}{C}H\text{-}OC_4H_9$, $CH_2\underset{CH_3}{C}H\text{-}OC_2H_4C_6H_5$, $CH_2\underset{CH_3}{C}H\text{-}OC_6H_5$,

$CH_2$-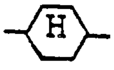-$CH_2OH$;

2. gegebenenfalls substituierte Cyclo- und Polycycloalkylreste:

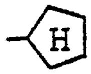 , 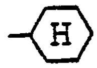 , 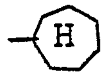 , 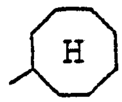 , 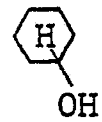 , 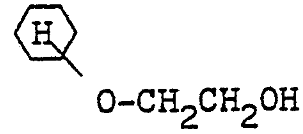 ,

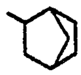 , 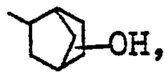 , 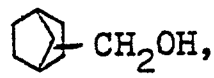 , 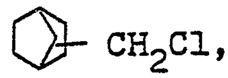

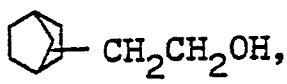 , 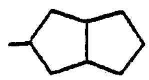 , 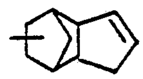 , 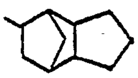 ,

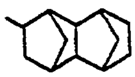 , 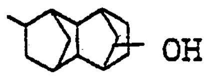 .

3. Aralkylreste:

$CH_2C_6H_5$, $C_2H_4C_6H_5$, $CH_2CH(CH_3)\text{-}C_6H_5$, $CH_2CH_2CH(CH_3)C_6H_5$, $CH_2CH(OH)\text{-}C_6H_5$, sowie $C_6H_4CH_3$ anstelle von $C_6H_5$;

4. gegebenenfalls substituierte Phenylreste:

$C_6H_5$, $C_6H_4CH_3$, $C_6H_3(CH_3)_2$, $C_6H_4OCH_3$, $C_6H_4OC_2H_5$, $C_6H_4OCH_2CH_2OH$ oder $C_6H_4Cl$;

5. die Reste: $CH_2CH{=}CH_2$, $CH_2COOCH_3$, $(CH_2)_5COOCH_3$, $(CH_2)_5COOC_2H_5$, $(CH_2)_5COOC_4H_9$, $(CH_2)_5COOCH_2CH(C_2H_5)(C_4H_9)$ ,

$(CH_2)_n$-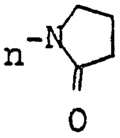 , wobei n = 2, 3, 4 oder 6 ist.

6. Acyloxyreste: $(CH_2)_2OCHO$, $(CH_2)_2OCOCH_3$, $(C_2H_4O)_2CHO$, $(C_2H_4O)_2COCH_3$, $(CH_2)_2OCOC_3H_7$, $(CH_2)_2OCOCH(C_4H_9)-C_2H_5$, $(CH_2)_2OCOC_6H_5$, $(CH_2)_2OCOC_6H_4CH_3$, $(CH_2)_2OCOC_6H_4Cl$, $(CH_2)_2OCOC_{10}H_7$, $(CH_2)_2OCONHCH_3$, $(CH_2)_2OCONHC_4H_9$, $(CH_2)_2OCONHCH_2CH(C_4H_9)-C_2H_5$, $(CH_2)_2OCONHC_6H_5$, $(CH_2)_2OCONHC_6H_4Cl$, $(CH_2)_2OCONHC_6H_3Cl_2$, sowie die entsprechenden Reste mit jeweils $(CH_2)_3$, $(CH_2)_4$ oder $(CH_2)_6$ .

7. Acylreste:

CHO, $CH_3CO$, $C_2H_5CO$, $C_3H_7CO$, $C_4H_9CH(C_2H_5)-CO$, $C_2H_5CO$, $CH_3C_6H_4CO$, $C_6H_5CH_2CO$, $C_6H_5OCH_2CO$, $CH_3SO_2$, $C_2H_5SO_2$, $C_6H_5SO_2$ oder $CH_3C_6H_4SO_2$.

Bevorzugte Substituenten sind beispielsweise: Wasserstoff, $CH_3$, $C_2H_5$, n- oder i-$C_3H_7$, n- oder i-$C_4H_9$, $C_6H_{13}$, $(CH_2)_6OH$, $CH(CH_3)(CH_2)_3C(OH)(CH_3)_2$, $(CH_2)_3O(CH_2)_4OH$, $(CH_2)_3O(CH_2)_6OH$, $CH_2CH_2OCH_3$, $CH_2CH_2OC_2H_5$, $CH_2CH_2OC_4H_9$, $(CH_2)_3OCH_3$, $(CH_2)_3OC_2H_5$, $(CH_2)_3OC_3H_7$, $(CH_2)_3OC_4H_9$,

$(CH_2)_3$-O 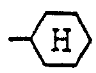 , $(CH_2)_3OCH_2$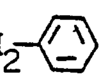, $(CH_2)_3O$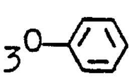 ,

$(CH_2)_2O$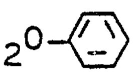 , $(CH_2)_3OC_2H_4OCH_3$, $(CH_2)_3OC_2H_4OC_4H_9$,

$(CH_2)_3OC_2H_4OC_6H_5$, 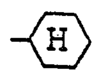 , 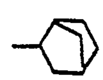 , $CH_2C_6H_5$, $C_2H_4C_6H_5$,

$CH_2\underset{CH_3}{CH}C_6H_5$, $C_6H_5$, $C_6H_4CH_3$, $C_6H_4OCH_3$ oder $C_6H_4OC_2H_4OH$ sowie $(CH_2)_5COOH$.

Reste $N{<}\genfrac{}{}{0pt}{}{B^1}{B^2}$ sind beispielsweise: Pyrrolidino, Piperidino, Morpholino, Piperazino oder Hexamethylenimino.

Carbonestergruppen X oder Y sind beispielsweise: $COOC_4H_9(n)$, $COO{-}CH_2{-}CH(CH_3)_2$, $COOC(CH_3)_3$, $COOC_4H_8Cl$, $COOC_5H_{11}{-}(n)$, $COOCH_2C(CH_3)_3$, $COOC_6H_{13}$, COO– 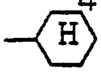 , $COOCH{<}\genfrac{}{}{0pt}{}{C_2H_5}{CH_2{-}CH{=}CH_2}$, $COOC_2H_4CH{<}\genfrac{}{}{0pt}{}{OCH_3}{CH_3}$, $COOC_7H_{15}$, $COOC_8H_{17}$, $COOCH_2CH{<}\genfrac{}{}{0pt}{}{C_2H_5}{C_4H_9}$, $COOC_9H_{19}$, $COOC_{10}H_{21}$, $COOC_{12}H_{25}$, $COOC_{16}H_{33}$, $COOC_{18}H_{37}$, $COOC_2H_4OC_2H_5$, $COOC_2H_4OC_4H_9$, $COOC_2H_4OC_6H_5$, $COOCH_2C_6H_5$, $COOC_2H_4C_6H_5$, $COOCH_2CH{<}\genfrac{}{}{0pt}{}{CH_3}{C_6H_5}$ $COOC_2H_4OC_6H_5$, $COO(C_2H_4O)_2CH_3$, $COO(C_2H_4O)_2C_2H_5$, $COO(C_2H_4O)_2C_4H_9$, $COO(C_2H_4O)_3C_2H_5$ oder $COO(C_2H_4O)_3C_4H_9$.

N-Substituenten der Carbon- oder Sulfonamide sind z. B. Wasserstoff, Butyl, n-Hexyl, Phenyl, Benzyl, Phenyläthyl, 2-Phenylpropyl, 2-Äthylhexyl, 1,5-Dimethylhexyl, n-Octyl, n-Dodecyl, n-Tridecyl, 6-Methyl-heptyl, 3-(2-Äthyl-hexoxy)-propyl, Stearyl, Cyclohexyl, ß-Methoxyäthyl, ß-Butoxyäthyl, γ-Methoxypropyl, γ-Butoxypropyl oder γ-Äthoxypropyl sowie das Pyrrolidid, Piperidid oder Morpholid.

O-Substituierten der Sulfonsäureester sind z. B. Phenyl, o-, m-, p-Tolyl, o-, m-, p-Chlorphenyl oder

2,5-Dichlorphenyl.

Zur Herstellung der Farbstoffe der Formel I kann man eine Diazoverbindung von Aminen der Formel II

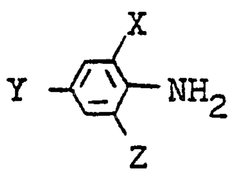 II

mit Kupplungskomponenten der Formel KH umsetzen, wobei K, X, Y und Z die genannte Bedeutung haben.

Die Diazotierung der Amine erfolgt wie üblich. Die Kupplung wird ebenfalls wie üblich in wäßrigem Medium, gegebenenfalls unter Zusatz von Lösungsmitteln, bei stark bis schwach saurer Reaktion durchgeführt.

Bevorzugt sind für das erfindungsgemäße Verfahren Farbstoffe die den Formeln

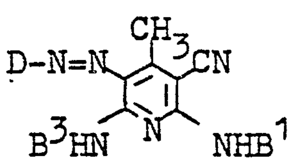 , 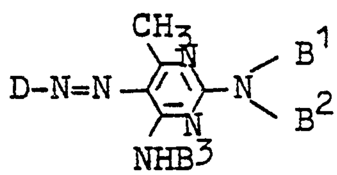 oder

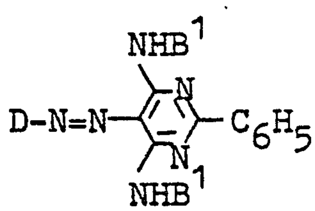 entsprechen,

wobei $B^1$, $B^2$ und $B^3$ die angegebene Bedeutung haben und D ein Rest der Formeln

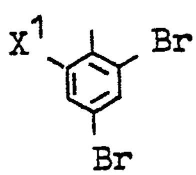 , 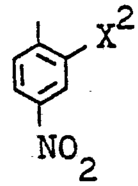 oder 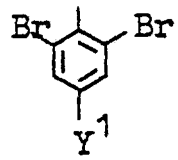 ist,

in denen

$X^1$ ein $C_4$- bis $C_{19}$-Carbonester-, $C_4$- bis $C_{19}$-Carbonamid- oder eine Sulfonsäurephenylestergruppe,

$X^2$ eine $C_4$- bis $C_{19}$-Carbonester- oder $C_4$- bis $C_{19}$-Carbonamidgruppe und

$Y^1$ eine $C_4$- bis $C_{19}$-Carbonester-, $C_4$- bis $C_{19}$-Carbonamid-, $C_6$- bis $C_{18}$-Sulfonamid- oder gegebenenfalls durch Chlor oder Methyl substituierte Sulfonsäurephenylestergruppe bedeuten.

Als Verfahren zur Applikation der Farbstoffe der Formel I eignen sich insbesondere die in der deutschen Patentschrift 1 811 796 und den deutschen Patentanmeldungen 25 24 243 und 25 28 743 sowie der Patentanmeldung P 28 55 188.4 beschriebenen Verfahren.

Einzelheiten der Herstellung und Verwendung können den Beispielen entnommen werden, in denen sich Angaben über Teile und Prozente sofern nicht anders vermerkt, auf das Gewicht beziehen.

Beispiel 1

43,5 Teile 3,5-Dibrom-anthranilsäuredecylester werden in einem Gemisch aus 150 Volumenteilen 100 %iger Essigsäure und 50 Volumenteilen 100 %iger Propionsäure bei 0 bis +5 °C verrührt. Der Mischung tropft man 33 Teile einer 42 %igen Nitrosylschwefelsäure zu und rührt etwa 30 Minuten bei 0 bis +5 °C nach, bis das Amin als Diazoniumsalz in Lösung gegangen ist. Nachdem dann überschüssige salpetrige Säure mit etwas Aminosulfonsäure entfernt worden ist, läßt man diese Diazoniumsalzlösung bei 0 °C in ein Gemisch aus 400 Raumteilen 85 %iger Essigsäure und 50 Teilen Natriumacetat einfließen, das 15,5 Teile 2,6-Diamino-3-cyan-4-methyl-pyridin gelöst enthält. Nach mehrstündigem Rühren unter allmählicher Erwärmung auf Raumtemperatur saugt man den Farbstoff ab und wäscht mit heißem Wasser salzfrei.

Ein Gewebe aus 65 Teilen Polyesterfaser und 35 Teilen mercerisierter Baumwolle wird mit einer Flotte imprägniert, die 80 g/l einer 20 %igen, wässrigen Zubereitung dieses wasserunlöslichen, goldgelben Dispersionsfarbstoffes der Formel

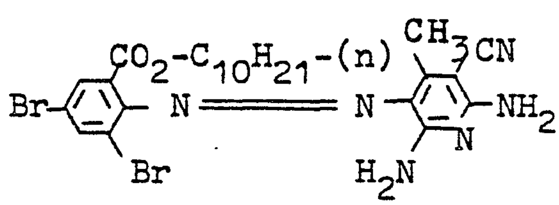

und 80 g/l eines Quell- und Farbstofflösemittels, bestehend aus 80 Teilen eines Polyäthylenglykols mit einem Molekulargewicht von 1500 und 20 Teilen eines Umsetzungsproduktes aus 1 Mol Hexamethylendiamin und 15 Mol Äthylenoxid, enthält. Der pH-Wert der Flotte wird mit Zitronensäure auf 6 eingestellt.

Das imprägnierte Gewebe wird 60 Sekunden bei 120 °C getrocknet und zur Fixierung des Farbstoffes weitere 60 Sekunden einer Temperatur von 215 °C ausgesetzt. Hierauf wird kalt und warm gespült und 20 Minuten bei 100 °C in Gegenwart eines handelsüblichen Waschmittels geseift.

Man erhält eine goldgelbe Färbung mit guten Licht- und Reibechtheiten.

Beispiel 2

Man bedruckt ein Mischgewebe aus Polyester/Baumwolle mit einer Zubereitung, die aus 10 Teilen des Farbstoffes aus Beispiel 1, 100 Teilen des Umsetzungsproduktes aus Polyäthylenoxid vom Molekulargewicht 300 mit Borsäure im Molverhältnis 3 : 1, 30 Teilen Ölsäurediäthanolamid und 860 Teilen einer 3 %igen Alginatverdickung besteht und trocknet den Druck bei 110 °C. Darauf behandelt man 5 Minuten bei 185 °C mit Heißdampf, spült kalt und seift bei 100 °C mit einem handelsüblichen Waschmittel. Man erhält einen licht-, wasch- und lösungsmittelechten goldgelben Druck auf weißem Fond.

Auf einem Gewebe aus reiner Baumwolle wird nach dem gleichen Verfahren ein farbgleicher Druck mit gleich guten Echtheiten erhalten.

Beispiel 3

Verwendet man unter den Herstellungsbedingungen des Beispiels 1 32,2 Teile 5-Nitro-anthranilsäure-(n)-decylester als Diazo- und 20,2 Teile 2,6-Bis-äthylamino-3-cyan-4-methylpyridin als Kupplungskomponente, so wird der Farbstoff der Formel

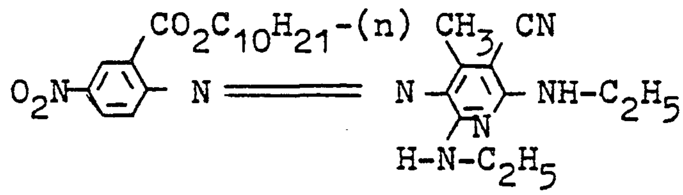

erhalten.

Man bedruckt ein Mischgewebe aus Polyester/Baumwolle (65 : 35) mit einer Paste, die aus 20 Teilen dieses Farbstoffes, 100 Teilen Polyäthylenoxid vom Molekulargewicht 350, 30 Teilen Ölsäurediäthanolamid und 840 Teilen einer 10 %igen Alginatverdickung besteht. Man trocknet das bedruckte Material bei 100 °C und fixiert danach in 60 Sekunden mit Heißluft bei 190/215 °C. Der Druck wird sodann kalt und warm gespült und bei 100 °C mit einem handelsüblichen Waschmittel geseift. Man erhält einen blaustichig roten Druck auf weißem Grund mit guten Licht-, Wasch- und Reibechtheiten.

Beispiel 4

Äquivalente Teile 5-Nitro-anthranilsäure-2-(β'-Butoxyäthoxy)-äthylester und 2,6-Bis-(β-phenyl-äthyl-amino)-3-cyan-4-methyl-pyridin liefern unter den Herstellungsbedingungen des Beispiels 1 den Farbstoff der Formel

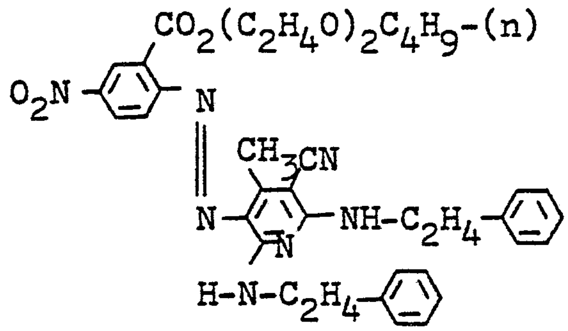

Ein mercerisierter Baumwoll-Köper wurde mit einer wäßrigen Färbeflotte imprägniert, die 80 g/l obigen Farbstoffes und 200 g einer Mischung aus 80 Teilen eines Polyäthylenglykols mit einem Molgewicht von 800 und 20 Teilen eines Blockpolymeren aus 1 Mol Äthylendiamin, 8 Mol Propylenoxid und 8 Mol Äthylenoxid enthielt. Der pH-Wert der Flotte wurde mit Zitronensäure auf 6 eingestellt. Die Flottenaufnahme betrug 52 %.

Anschließend wurde das Gewebe wie üblich bei 120 °C getrocknet und 30 Sekunden bei 215 °C in einem Labortrockner fixiert. Nach dem Spülen und Waschen erhielt man bei sehr geringem Farbstoffverlust eine intensive, rote Färbung mit guten Echtheiten.

Beispiel 5

Nach den Herstellungsbedingungen des Beispiels 1 wird unter Verwendung äquivalenter Mengen Anthranilsäure-ßphenyläthyl-ester und 2-(ß-Phenyläthyl-amino)-3-cyan-4-methyl-6-amino-pyridin der Farbstoff der Formel

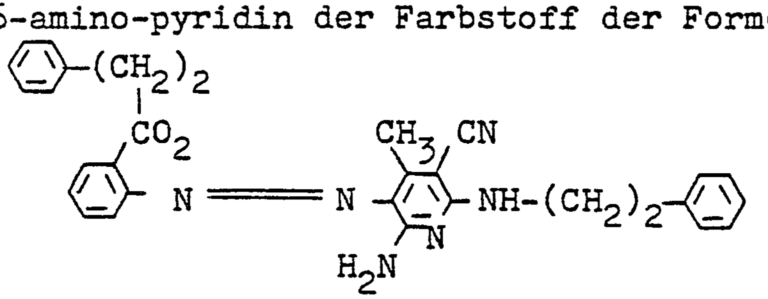

erhalten.

Ein Gewebe aus 67 Teilen Polyesterfaser und 33 Teilen Baumwolle (mercerisiert) wurde mit einer Flotte imprägniert, die 100 g/l einer Mischung aus 80 Teilen eines Borsäureesters von Polyäthylenglykol (Molgewicht etwa 800) im Molverhältnis 1 : 3 und 20 Teilen Äthylendiamin, umgesetzt mit 35 Mol Äthylenoxid, enthielt. Die Flottenaufnahme betrug 80 %. Anschließend wurde 15 Minuten bei 60 bis 70 °C getrocknet.

Auf das Substrat wurde folgende Druckpaste gedruckt:

| | |
|---|---|
| 500 Teile | wäßrige Stärkeäther-Verdickung (10 %) |
| 2 Teile | Zitronensäure |
| 10 Teile | m-nitrobenzolsulfonsaures Natrium |
| 50 Teile | obigen Farbstoffes |
| x Teile | Wasser |
| 1000 Teile | |

Nach der Fixierung und dem Nachwaschen wurde ein roter Druck erhalten.

Beispiel 6

Ein Gewebe aus 65 Teilen Polyester-Fasern und 35 Teilen mercerisierter Baumwolle wird mit einer Färbeflotte imprägniert, die 20 g/l einer 20 %igen Zubereitung des Farbstoffs der Formel

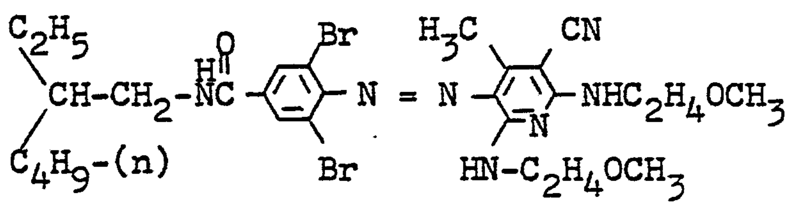

und als Quell- und Farbstofflösungsmittel 60 g/l einer Mischung aus 1 Teil eines Umsetzungsproduktes aus 1 Mol i-Octylphenol und 14 Mol Äthylenoxid und 2 Teilen eines Umsetzungsproduktes aus 1 Mol Piperazin und 16 Mol Äthylenoxid enthält. Der pH-Wert der Flotte wurde mit Glutarsäure auf 6 eingestellt. Das Gewebe nur 60 Sek. bei 120 °C getrocknet und anschließend der Farbstoff 30 Sek. bei 225 °C fixiert. Dann wird kalt und warm gespült und bei 100 °C in Gegenwart eines handelsüblichen Waschmittels gewaschen. Man erhält eine gelborange Färbung mit guten Wasch- und Lichtechtheiten.

Beispiel 7

24 Teile 4-Amino-3,5-dibrombenzoesäure-(2-äthylhexyl)-amid werden in 105 Teilen Eisessig gelöst und mit 15 Raumteilen konzentrierter Salzsäure versetzt. Nach Kühlen auf 10 - 15 °C läßt man 15 Raumteile einer 23 %igen wäßrigen Natriumnitrit-Lösung einfließen und zerstört nach 2-stündigem Rühren bei 10 - 15 °C die überschüssige salpetrige Säure wie üblich durch Zugabe einer wäßrigen Amidosulfonsäure-Lösung.

Die so erhaltene Lösung des Diazoniumsalzes gibt man allmählich bei 0 - 5 °C zu dem Gemisch von 14,6 g 2,6-Bis-(methoxypropylamino)-3-cyan-4-methylpyridin mit 1050 Teilen Eisessig und 50 Teilen Wasser sowie 200 Teilen Eis. Man fügt noch 50 Teile Natriumacetat hinzu und rührt bis zum Ende der Kupplung. Die Aufarbeitung wird in der Weise durchgeführt, daß man 1500 Teile Wasser in die Kupplungslösung einlaufen läßt, den Niederschlag absaugt, mit Wasser wäscht und trocknet. Es resultieren 31 Teile eines orangefarbenen Pulvers der Formel

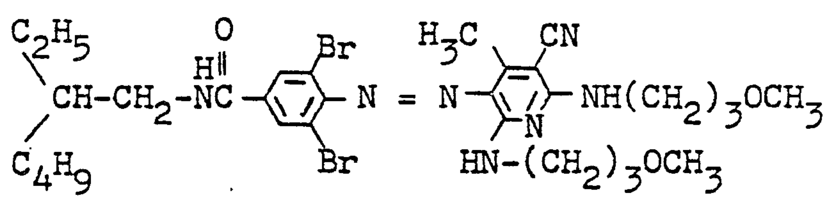

Man bedruckt ein Baumwollgewebe im Rotationsfilmdruck mit einer Farbe, die aus 15 Teilen des obigen Farbstoffes, 100 Teilen Polyäthylenoxid vom Molekulargewicht 300 und 790 Teilen einer 3 %igen Alginatverdickung besteht und trocknet den Druck bei 100 °C. Danach behandelt man 1 Minute bei 200 °C mit Heißluft, spült den Druck kalt, seift ihn kochend, spült wiederum kalt und trocknet. Man erhält einen licht- und waschechten gelborange Druck auf

weißem Grund.

Beispiel 8

Ein Mischgewebe aus Polyester/Baumwolle (Gewichtsverhältnis 50 : 50) wird mit einer wäßrigen Flotte imprägniert, die 20 g/l einer 20 %igen Zubereitung des Farbstoffes der Formel

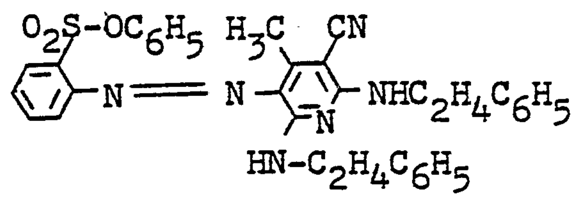

und als Quell- und Farbstofflösungsmitttel 50 g/l einer Mischung aus 80 Teilen eines Polyäthylenglykols mit einem Molekulargewicht von 600 und 20 Teilen eines Umsetzungsproduktes aus 1 Mol Triäthanolamin und 14 Mol Äthylenoxid enthält. Der pH-Wert der Flotte wurde mit Glutarsäure auf 7 eingestellt. Es wird 60 Sekunden bei 120 °C getrocknet und anschließend 90 Sek. bei 210 °C erhitzt. Dann wird kalt und warm gespült und 5 Min. bei 100 °C in Gegenwart eines handelsüblichen Waschmittels gewaschen. Man erhält eine licht- und waschechte goldgelbe Färbung.

Beispiel 9

22,12 Teile 4-Amino-3,5-dibrombenzolsulfonsäure-(2-äthylhexyl)-amid werden in 100 Raumteilen Eisessig mit 15 Raumteilen konzentrierter Salzsäure angerührt und bei 10 - 15 °C mit 15 Raumteilen einer 23 %igen wäßrigen Natriumnitritlösung versetzt. Das Gemisch wird mit weiteren 62 Raumteilen Eisessig verdünnt und 2 Stunden bei 10 - 15°C gerührt. Nach üblicher Entfernung der überschüssigen salpetrigen Säure tropft man das Diazotierungsgemisch bei 0 - 5 °C zu einer Mischung von 16,95 Teilen 6-Amino-3-cyan-4-methyl-2-phenoxyäthoxypropylaminopyridin mit 1050 Teilen Eisessig, 50 Teilen Wasser und 200 Teilen Eis. Anschließend setzt man noch 100 Teile Natriumacetat hinzu und rührt bis zur beendeten Kupplung. Der entstandene Farbstoff wird abgesaugt, mit Wasser gewaschen und getrocknet. Man erhält 28 Teile orangefarbenes Pulver der Formel

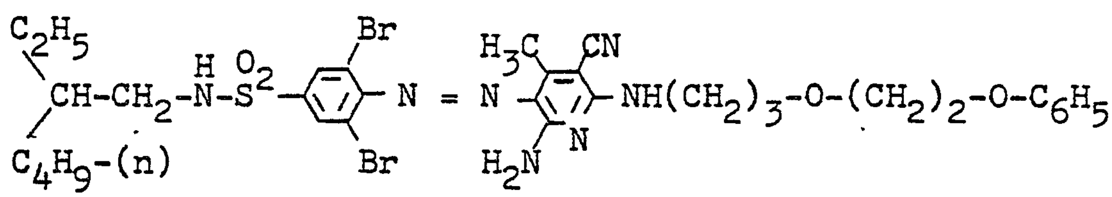

Man bedruckt ein Mischgewebe aus Polyester/Baumwolle (Gewichtsverhältnis 65 : 35) mit einer Paste, die aus 20 Teilen des obigen Farbstoffes, 120 Teilen des Umsetzungsproduktes aus Polyäthylenoxid vom Molekulargewicht 300 mit Borsäure im Molverhältnis 3 : 1 und 860 Teilen einer 10 %igen Alginatverdickung besteht. Der Druck wird bei 105 °C getrocknet und 6 Minuten bei 180 °C mit Heißdampf behandelt. Darauf spült man zunächst mit kaltem Wasser, seift den Druck dann bei 80 °C, spült kalt und trocknet. Man erhält einen licht- und waschechten goldgelben Druck auf weißem Grund.

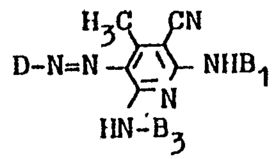

| Bsp. | D | $B_1$ | $B_3$ | Farbton auf PES/BW |
|---|---|---|---|---|
| 10 | 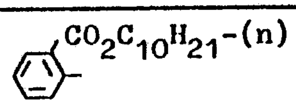 | H | H | goldgelb |
| 11 | " | $C_4H_9$-(n) | H | " |
| 12 | " | $C_2H_4$- 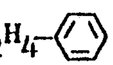 | H | " |
| 13 | " | $C_3H_6$-O-$C_2H_4$-O- 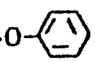 | H | " |
| 14 | " | $C_4H_9$-(n) | $C_4H_9$-(n) | " |
| 15 | 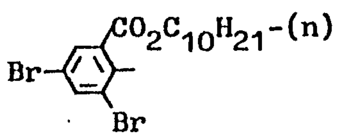 | $C_4H_9$-(n) | H | " |

| Bsp. | D | $B_1$ | $B_3$ | Farbton auf PES/BW |
|---|---|---|---|---|
| 16 | 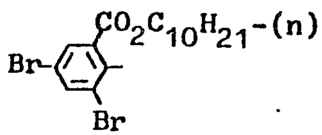 | $C_2H_4$– 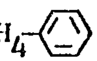 | H | goldgelb |
| 17 | " | $C_2H_4OCH_3$ | H | " |
| 18 | " | $C_3H_6$-O-$C_4H_8$-OH | H | " |
| 19 | " | $C_4H_9$-(n) | $C_4H_9$-(n) | " |
| 20 | " | $C_3H_6OCH_3$ | $C_3H_6OCH_3$ | " |
| 21 | " | $C_2H_4$-O-$C_4H_9$-(n) | H | " |
| 22 | " | 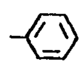 | H | " |

| Bsp. | D | $B_1$ | $B_3$ | Farbton auf PES/BW |
|---|---|---|---|---|
| 23 | 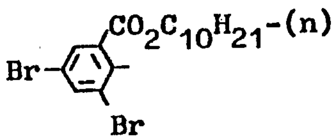 | 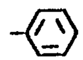 | $C_2H_4$-O-$C_4H_9$-(n) | goldgelb |
| 24 | " | $C_3H_6$-O-$C_2H_5$ | $C_3H_6$-O-$C_2H_5$ | " |
| 25 | " | $C_2H_5$ | $C_2H_5$ | " |
| 26 | " | $C_2H_4$-O-CH$(CH_3)_3$ | $C_2H_4$-O-CH$(CH_3)_3$ | " |
| 27 | " | 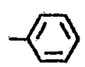 | $C_2H_4OCH_3$ | " |
| 28 | 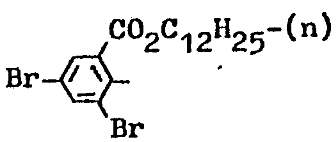 | H | H | " |
| 29 | " | $C_4H_9$ | H | " |

| Bsp. | D | $B_1$ | $B_3$ | Farbton auf PES/BW |
|---|---|---|---|---|
| 30 | 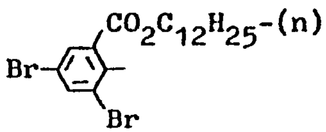 | 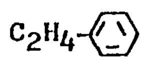 | H | goldgelb |
| 31 | " | $C_3H_6-O-C_2H_5$ | H | " |
| 32 | " | $C_2H_4-O-C_4H_9-(n)$ | $C_2H_4-O-C_4H_9-(n)$ | " |
| 33 | 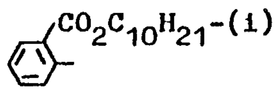 | H | H | " |
| 34 | " | $C_2H_4-O-C_4H_9-(n)$ | H | " |
| 35 | " | 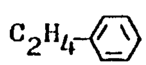 | H | " |

| Bsp. | D | $B_1$ | $B_3$ | Farbton auf PES/BW |
|---|---|---|---|---|
| 36 | 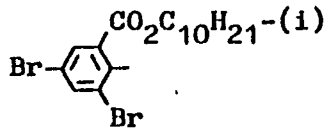 | H | H | goldgelb |
| 37 | " | $C_2H_4OCH_3$ | H | " |
| 38 | " | $C_4H_9$-(n) | H | " |
| 39 | " | $C_3H_6$-O-$C_4H_8$-OH | H | " |
| 40 | " | $C_4H_9$-(n) | $C_4H_9$-(n) | " |
| 41 | " | $C_2H_4$-O-$C_4H_9$-(n) | $C_2H_4$-O-$C_4H_9$-(n) | " |
| 42 | " | $C_3H_6OCH_3$ | $C_3H_6OCH_3$ | " |

| Bsp. | D | $B_1$ | $B_3$ | Farbton auf PES/BW |
|---|---|---|---|---|
| 43 | (n)-$H_{21}C_{10}$-$O_2C$- 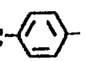 | H | H | goldgelb |
| 44 | " | $C_4H_9$-(n) | H | " |
| 45 | " | $C_2H_4$- 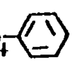 | H | " |
| 46 | (n)-$H_{21}C_{10}$-$O_2C$- 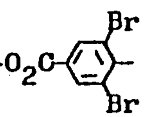 | H | H | " |
| 47 | " | $C_2H_4OCH_3$ | H | " |
| 48 | " | $C_4H_9$-(n) | H | " |
| 49 | " | " | $C_4H_9$-(n) | " |

0023315

| Bsp. | D | $B_1$ | $B_3$ | Farbton auf PES/BW |
|---|---|---|---|---|
| 50 | 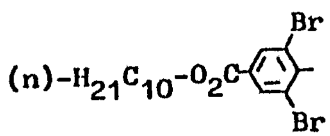 | $C_2H_4-O-C_4H_9-(n)$ | $C_2H_4-O-C_4H_9-(n)$ | goldgelb |
| 51 | 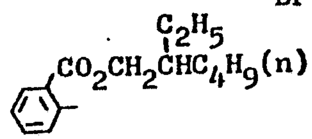 | H | H | " |
| 52 | " | $C_4H_9-(n)$ | H | " |
| 53 | 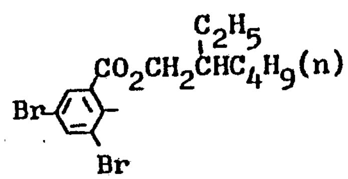 | H | H | " |
| 54 | " | $C_4H_9-(n)$ | $C_4H_9-(n)$ | " |
| 55 | " | 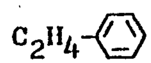 | H | " |

| Bsp. | D | $B_1$ | $B_3$ | Farbton auf PES/BW |
|---|---|---|---|---|
| 56 | 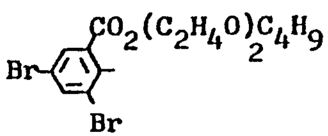 | H | H | goldgelb |
| 57 | " | $C_4H_9$-(n) | H | " |
| 58 | " | 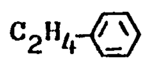 | H | " |
| 59 | 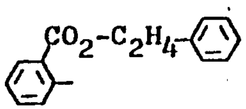 | $C_4H_9$-(n) | H | " |
| 60 | " | 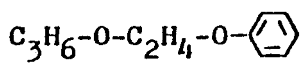 | H | " |
| 61 | 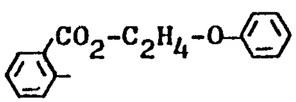 | 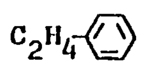 | H | " |

0023315

| Bsp. | D | $B_1$ | $B_3$ | Farbton auf PES/BW |
|---|---|---|---|---|
| 62 | 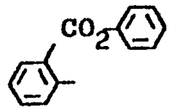 | $C_4H_9$-(n) | H | goldgelb |
| 63 | " | $CH_2-\underset{}{CH}(C_2H_5)-C_4H_9$-(n) | H | " |
| 64 | " | 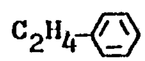 | H | " |
| 65 | " | 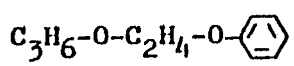 | H | " |
| 66 | " | $C_3H_6-O-C_2H_5$ | $C_3H_6-O-C_2H_5$ | " |
| 67 | 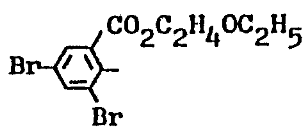 | 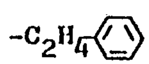 | H | " |

| Bsp. | D | $B_1$ | $B_3$ | Farbton auf PES/BW |
|---|---|---|---|---|
| 68 | 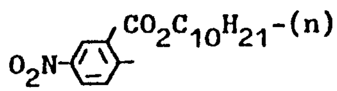 | H | H | orange |
| 69 | " | $C_2H_4-OCH_3$ | H | scharlach |
| 70 | " | $C_2H_4-OC_4H_9-(n)$ | H | " |
| 71 | " | $C_3H_6-OCH_3$ | H | " |
| 72 | " | $C_3H_6-OC_2H_5$ | H | " |
| 73 | " | $C_4H_9-(n)$ | H | " |
| 74 | " | 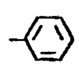 | H | " |

| Bsp. | D | $B_1$ | $B_3$ | Farbton auf PES/BW |
|---|---|---|---|---|
| 75 | 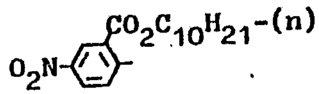 | 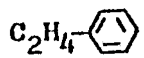 | H | scharlach |
| 76 | " | $C_3H_6-O-C_4H_8-OH$ | H | " |
| 77 | " | 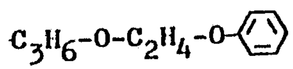 | H | " |
| 78 | " | 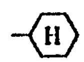 | H | " |
| 79 | " | $C_2H_4-OCH_3$ | $C_2H_4-OCH_3$ | rot |
| 80 | " | $C_2H_4-OC_4H_9-(n)$ | $C_2H_4-OC_4H_9-(n)$ | rot |
| 81 | " | $C_3H_6-OCH_3$ | $C_3H_6-OCH_3$ | rot |

0023315

| Bsp. | D | $B_1$ | $B_3$ | Farbton auf PES/BW |
|---|---|---|---|---|
| 82 | 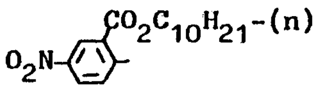 | $C_3H_6-OC_2H_5$ | $C_3H_6-OC_2H_5$ | rot |
| 83 | " | $C_4H_9-(n)$ | $C_4H_9-(n)$ | rot |
| 84 | " | 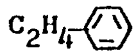 | 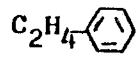 | rot |
| 85 | " | 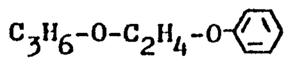 | $C_3H_6-OCH_3$ | rot |
| 86 | " | 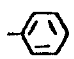 | $C_2H_4-OCH_3$ | rot |
| 87 | " | 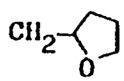 | 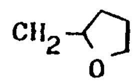 | rot |
| 88 | " | 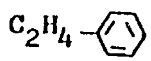 | $C_2H_4OCH_3$ | rot |

| Bsp. | D | $B_1$ | $B_3$ | Farbton auf PES/BW |
|---|---|---|---|---|
| 89 | 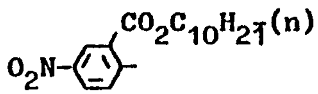 | $(C_2H_4-OCH_3)_2$ | $C_2H_4OCH_3$ | rot |
| 90 | " | 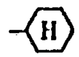 | 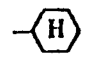 | rot |
| 91 | 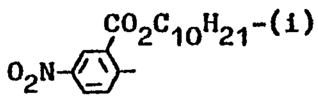 | H | H | orange |
| 92 | " | $C_4H_9-(n)$ | H | scharlach |
| 93 | " | 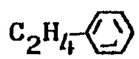 | H | " |
| 94 | " | $C_2H_4-OC_4H_9-(n)$ | H | " |
| 95 | " | $C_2H_4-OC_4H_9-(n)$ | $C_2H_4-OC_4H_9-(n)$ | rot |

| Bsp. | D | $B_1$ | $B_3$ | Farbton auf PES/BW |
|---|---|---|---|---|
| 96 | 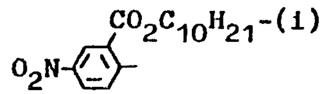 | $C_3H_6-OC_2H_5$ | $C_3H_6-OC_2H_5$ | rot |
| 97 | " | $C_2H_4-$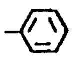 | $C_2H_4-$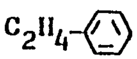 | rot |
| 98 | " | $C_3H_6-O-C_2H_4-OCH_3$ | $C_3H_6-O-C_2H_4-OCH_3$ | rot |
| 99 | 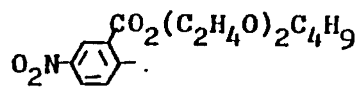 | $C_3H_6-O-C_2H_4-O-$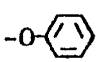 | H | scharlach |
| 100 | " | $C_2H_4-$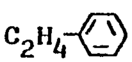 | H | rot |
| 101 | " | $C_2H_4-OC_4H_9-(n)$ | $C_2H_4-OC_4H_9-(n)$ | rot |
| 102 | " | $C_3H_6-OC_2H_5$ | $C_3H_6-OC_2H_5$ | rot |

| Bsp. | D | $B_1$ | $B_3$ | Farbton auf PES/BW |
|---|---|---|---|---|
| 103 | 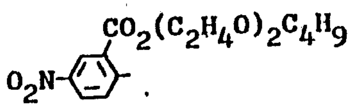 | $C_4H_9$-(n) | $C_4H_9$-(n) | rot |
| 104 | " | 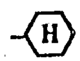 | 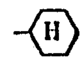 | rot |
| 105 | 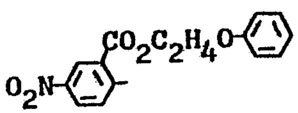 | $C_4H_9$-(n) | H | scharlach |
| 106 | " | $C_2H_4$-$OC_4H_9$-(n) | H | scharlach |
| 107 | " | 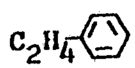 | H | " |
| 108 | " | 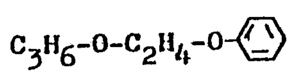 | H | " |
| 109 | " | $C_2H_4$-$OC_4H_9$(n) | $C_2H_4$-$OC_4H_9$(n) | rot |

0023315

| Bsp. | D | $B_1$ | $B_3$ | Farbton auf PES/BW |
|---|---|---|---|---|
| 110 | 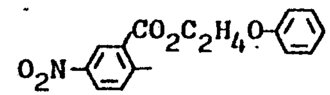 | $C_3H_6OCH_3$ | $C_3H_6OCH_3$ | rot |
| 111 | " | $C_4H_9$-(n) | $C_4H_9$-(n) | rot |
| 112 | " | $C_2H_4$- 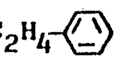 | $C_2H_4$- 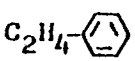 | rot |
| 113 | " | $C_3H_6$-O-$C_2H_4$-O- 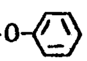 | $C_3H_6$-O-$C_2H_4$-O- 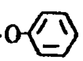 | rot |
| 114 | " | 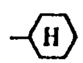 | 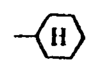 | rot |
| 115 | 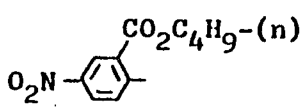 | 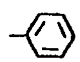 | H | rot |

| Bsp. | D | $B_1$ | $B_3$ | Farbton auf PES/BW |
|---|---|---|---|---|
| 116 | 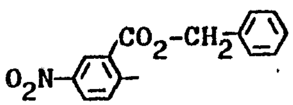 | $C_3H_6OCH_3$ | 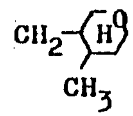 | rot |
| 117 | " | " | 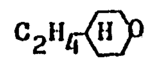 | rot |
| 118 | " | 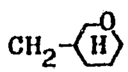 | 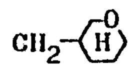 | rot |
| 119 | 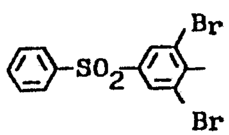 | $(CH_2)_3OCH_3$ | $(CH_2)_3OCH_3$ | orange |
| 120 | " | $(CH_2)_2OCH_3$ | " | " |
| 121 | 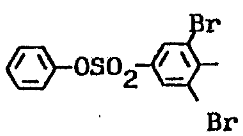 | " | " | " |

| Bsp. | D | $B_1$ | $B_3$ | Farbton auf PES/BW |
|---|---|---|---|---|
| 122 | 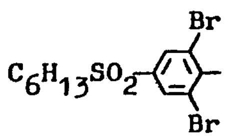 | 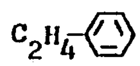 | 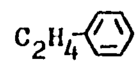 | orange |
| 123 | 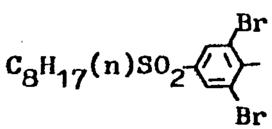 | $(CH_2)_3OCH_3$ | $(CH_2)_3OCH_3$ | " |
| 124 | 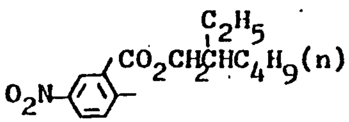 | $C_2H_4OCH_3$ | H | scharlach |
| 125 | " | $C_2H_4-OC_4H_9-(n)$ | H | " |
| 126 | " | $C_3H_6-OCH_3$ | H | " |
| 127 | " | $C_3H_6-OC_2H_5$ | H | " |

| Bsp. | D | $B_1$ | $B_3$ | Farbton auf PES/BW |
|---|---|---|---|---|
| 128 | 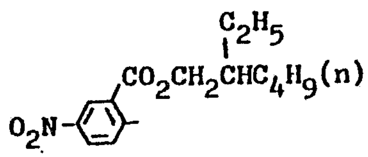 | 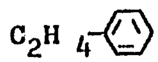 | H | scharlach |
| 129 | " | 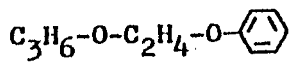 | H | " |
| 130 | " | $C_3H_6-O-C_4H_8-OH$ | H | " |
| 131 | " | $C_2H_5$ | $C_2H_5$ | rot |
| 132 | " | $C_2H_4-OCH_3$ | $C_2H_4-OCH_3$ | rot |
| 133 | " | $C_2H_4-OC_4H_9-(n)$ | $C_2H_4-OC_4H_9-(n)$ | rot |
| 134 | " | $C_3H_6-OCH_3$ | $C_3H_6-O-C_4H_8-OH$ | rot |

| Bsp. | D | $B_1$ | $B_3$ | Farbton auf PES/BW |
|---|---|---|---|---|
| 135 | 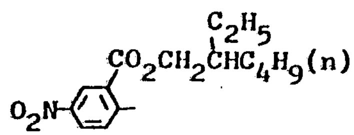 | $C_3H_6-OCH_3$ | $C_3H_6-OCH_3$ | rot |
| 136 | " | $C_3H_6-OC_2H_5$ | $C_3H_6-OC_2H_5$ | rot |
| 137 | " | $C_4H_9-(n)$ | $C_4H_9-(n)$ | rot |
| 138 | " | $C_2H_4-$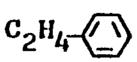 | $C_2H_4-$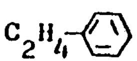 | rot |
| 139 | 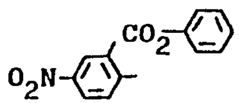 | $C_2H_4-OC_4H_9-(n)$ | H | scharlach |
| 140 | " | $C_3H_6-OC_2H_5$ | H | " |
| 141 | " | $C_3H_6-O-C_4H_8-OH$ | H | " |

| Bsp. | D | $B_1$ | $B_3$ | Farbton auf PES/BW |
|---|---|---|---|---|
| 142 | 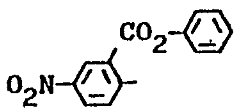 | $C_2H_4-OC_4H_9-(n)$ | $C_2H_4-OC_4H_9-(n)$ | rot |
| 143 | " | $C_3H_6-OCH_3$ | $C_3H_6-O-C_4H_8-OH$ | rot |
| 144 | " | $C_3H_6-OCH_3$ | $C_3H_6-OCH_3$ | rot |
| 145 | " | $C_2H_4-OCH_3$ | $C_2H_4-OCH_3$ | rot |
| 146 | " | $C_3H_6-OC_2H_5$ | $C_3H_6-OC_2H_5$ | rot |
| 147 | " | $C_4H_9-(n)$ | $C_4H_9-(n)$ | rot |

| Bsp. | D | $B_1$ | $B_3$ | Farbton auf PES/BW |
|---|---|---|---|---|
| 148 | 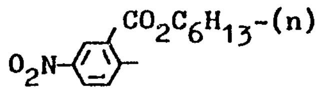 | $C_2H_4-OC_4H_9-(n)$ | H | scharlach |
| 149 | " | $C_3H_6-OC_2H_5$ | H | " |
| 150 | " | 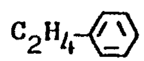 | H | " |
| 151 | " | $C_2H_4-OC_4H_9-(n)$ | $C_2H_4-OC_4H_9-(n)$ | rot |
| 152 | " | $C_3H_6-OC_2H_5$ | $C_3H_6-OC_2H_5$ | rot |
| 153 | " | $C_4H_9-(n)$ | $C_4H_9-(n)$ | rot |
| 154 | " | 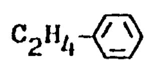 | 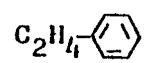 | rot |

| Bsp. | D | $B_1$ | $B_3$ | Farbton auf PES/BW |
|---|---|---|---|---|
| 155 | 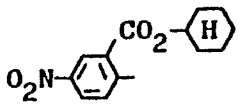 | 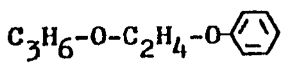 | H | scharlach |
| 156 | " | $C_2H_4-OCH_3$ | $C_2H_4-OCH_3$ | rot |
| 157 | " | $C_3H_6-OCH_3$ | $C_3H_6-OCH_3$ | rot |
| 158 | " | 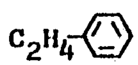 | 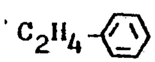 | rot |
| 159 | 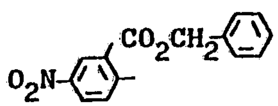 | $C_3H_6OCH_3$ | 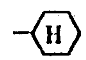 | rot |
| 160 | " | $C_3H_6-OCH_3$ | $C_3H_6-OCH_3$ | rot |
| 161 | " | $C_2H_4-O-C_4H_9-(n)$ | $C_2H_4-O-C_4H_9-(n)$ | rot |

| Bsp. | D | $B_1$ | $B_3$ | Farbton auf PES/BW |
|---|---|---|---|---|
| 162 | 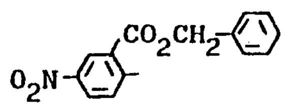 | 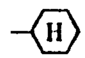 | 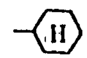 | rot |

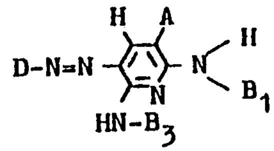

| Bsp. | D | A | $B_1$ | $B_3$ | Farbton auf PES/BW |
|---|---|---|---|---|---|
| 163 | 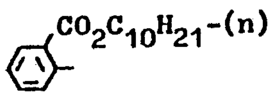 | $CONH_2$ | $C_4H_9$-(n) | H | goldgelb |
| 164 | (n)-$H_{21}C_{10}O_2C$-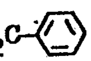 | $CONH_2$ | $C_2H_4$-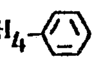 | H | " |
| 165 | 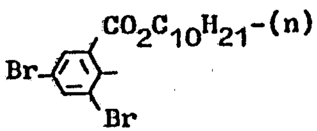 | $CONH_2$ | " | H | " |
| 166 | " | CN | $C_4H_9$-(n) | $C_4H_9$-(n) | " |

| Bsp. | D | A | $B_1$ | $B_3$ | Farbton auf PES/BW |
|---|---|---|---|---|---|
| 167 | 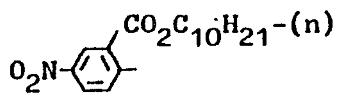 | $CONH_2$ | $C_4H_9$-(n) | H | rot |
| 168 | " | CN | " | $C_4H_9$-(n) | rot |

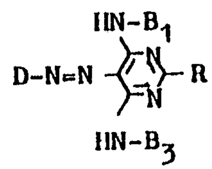

| Bsp. | D | R | $B_1$ | $B_3$ | Farbton auf PES/BW |
|---|---|---|---|---|---|
| 169 | 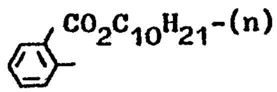 | 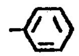 | H | H | goldgelb |
| 170 | 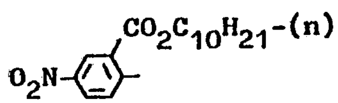 | 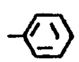 | H | H | orange |
| 171 | 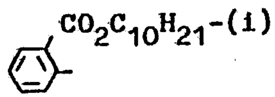 | " | H | 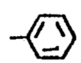 | goldgelb |
| 172 | 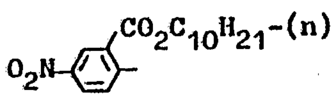 | " | H | " | orange |
| 173 | 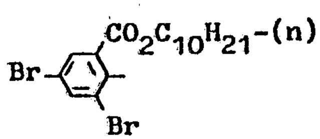 | " | $C_2H_4-OCH_3$ | $CH_2$- 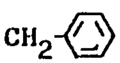 | orange |

| Bsp. | D | R | $B_1$ | $B_3$ | Farbton auf PES/BW |
|---|---|---|---|---|---|
| 174 | 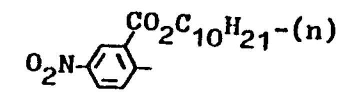 | 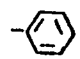 | $C_2H_4-OCH_3$ | 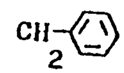 | rot |
| 175 | 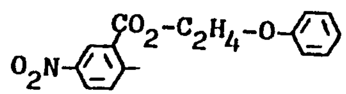 | " | $C_3H_6-OCH_3$ | " | rot |
| 176 | 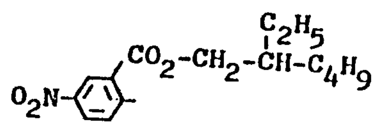 | " | H | 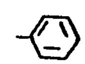 | orange |

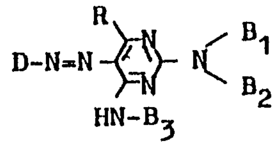

| Bsp. | D | R | $B_1 = B_2$ | $B_3$ | Farbton auf PES/BW |
|---|---|---|---|---|---|
| 177 | 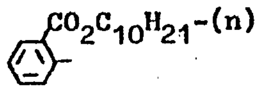 | 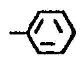 | $C_4H_9$-(n) | 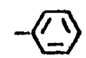 | orange |
| 178 | 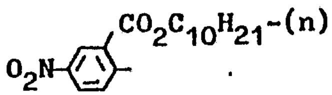 | " | " | $C_3H_6-OCH_3$ | rot |
| 179 | 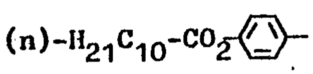 | $CH_3$ | $C_2H_5$ | $C_2H_4-OCH_3$ | orange |
| 180 | 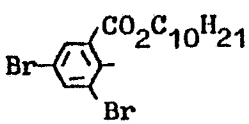 | $CH_3$ | " | $C_3H_6-OCH_3$ | goldgelb |

| Bsp. | D | R | $B_1 = B_2$ | $B_3$ | Farbton auf PES/BW |
|---|---|---|---|---|---|
| 181 | 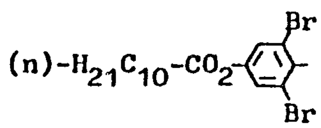 | $CH_3$ | $C_4H_9$-(n) | 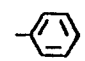 | goldgelb |
| 182 | 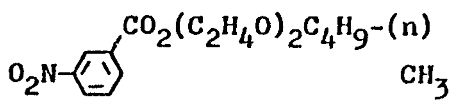 | $CH_3$ | " | " | rot |
| 183 | 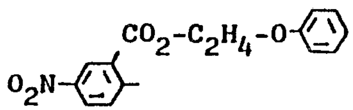 | $CH_3$ | " | " | rot |

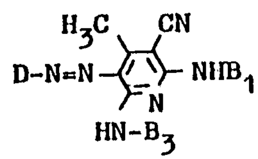

| Bsp. | $H_2N-D$ | $B_1$ | $B_3$ | Farbton auf PES/BW sowie Mischgewebe |
|---|---|---|---|---|
| 184 | 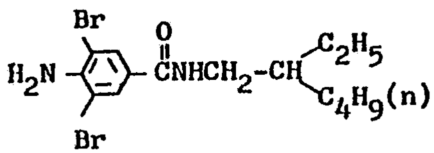 | $-(CH_2)_2OC_4H_9-(n)$ | $-(CH_2)_2OCH_3$ | gelborange |
| 185 | " | $-C_2H_4-C_6H_5$ | H | goldgelb |
| 186 | " | $-CH_2CH(CH_3)-C_6H_5$ | H | " |
| 187 | " | $(CH_2)_3O(CH_2)_2OC_6H_5$ | H | " |
| 188 | " | $(CH_2)_2OC_4H_9-(n)$ | $(CH_2)_2OC_4H_9-(n)$ | gelborange |
| 189 | " | $C_2H_4C_6H_5$ | $C_2H_4C_6H_5$ | " |
| 190 | " | $(CH_2)_2OC_4H_9-(n)$ | H | goldgelb |

| Bsp. | $H_2N$-D | $B_1$ | $B_3$ | Farbton auf PES/BW sowie Mischgewebe |
|---|---|---|---|---|
| 191 | 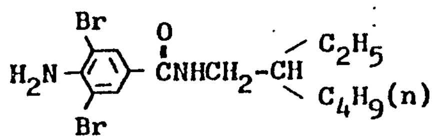 | $-(CH_2)_3OC_2H_5$ | $-(CH_2)_3OC_2H_5$ | gelborange |
| 192 | " | $C_2H_4C_6H_5$ | $-C_2H_5$ | " |
| 193 | " | " | $-CH_3$ | " |
| 194 | " | $C_4H_9$-(n) | $-C_4H_9$-(n) | " |
| 195 | " | $(CH_2)_3OCOC_6H_5$ | $(CH_2)_3OCOC_6H_5$ | " |
| 196 | " | $(CH_2)_2OCOC_6H_5$ | $(CH_2)_2OCOC_6H_5$ | " |
| 197 | " | $CH_2C_6H_5$ | H | goldgelb |
| 198 | " | $(CH_2)_3OCH_2C_6H_5$ | H | " |
| 199 | " | $(CH_2)_3O(CH_2)_2OC_4H_9$-(n) | H | " |
| 200 | " | $C_2H_4C_6H_{11}$ | H | " |

| Bsp. | $H_2N-D$ | $B_1$ | $B_3$ | Farbton auf PES, BW sowie Mischgewebe |
|---|---|---|---|---|
| 201 | 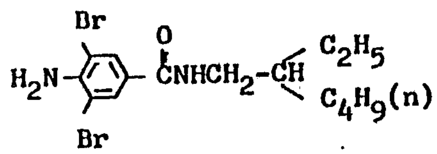 | $(CH_2)_3OC_4H_9(n)$ | $(CH_2)_3OC_4H_9-(n)$ | gelborange |
| 202 | " | " | H | goldgelb |
| 203 | 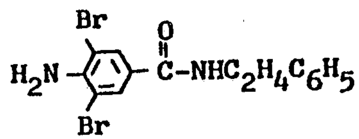 | $C_2H_4-C_6H_5$ | H | " |
| 204 | " | $(CH_2)_3OCH_3$ | $(CH_2)_3OCH_3$ | gelborange |
| 205 | " | $(CH_2)_3O(CH_2)_2OC_6H_5$ | H | goldgelb |
| 206 | " | $(CH_2)_3OC_4H_9-(n)$ | H | goldgelb |
| 207 | " | $(CH_2)_3OC_2H_5$ | H | " |

| Bsp. | $H_2N$-D | $B_1$ | $B_3$ | Farbton auf PES, BW sowie Mischgewebe |
|---|---|---|---|---|
| 208 | 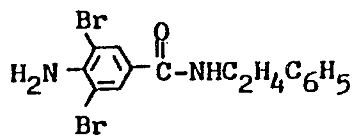 | $(CH_2)_3OC_2H_5$ | $(CH_2)_3OC_2H_5$ | gelborange |
| 209 | " | $(CH_2)_3OC_4H_9(n)$ | $(CH_2)_3OC_4H_9(n)$ | gelborange |
| 210 | " | $(CH_2)_2OC_4H_9(n)$ | $(CH_2)_2OC_4H_9(n)$ | gelborange |
| 211 | " | $C_4H_9$-(n) | H | goldgelb |
| 212 | 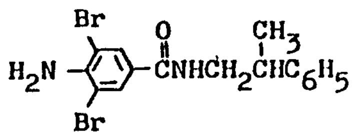 | $(CH_2)_3OCH_3$ | $(CH_2)_3OCH_3$ | gelborange |
| 213 | " | $(CH_2)_3OC_2H_5$ | $(CH_2)_3OC_2H_5$ | gelborange |
| 214 | " | $(CH_2)_3O(CH_2)_2OC_6H_5$ | H | goldgelb |
| 215 | 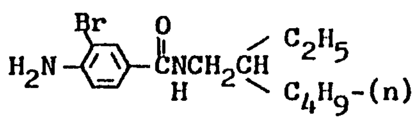 | $(CH_2)_2OCH_3$ | $(CH_2)_2OCH_3$ | goldgelb |

| Bsp. | $H_2N-D$ | $B_1$ | $B_3$ | Farbton auf PES, BW sowie Mischgewebe |
|---|---|---|---|---|
| 216 | 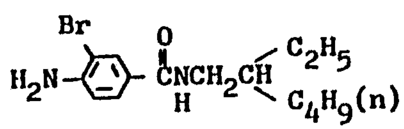 | $(CH_2)_3OCH_3$ | $(CH_2)_3OCH_3$ | goldgelb |
| 217 | " | $C_2H_4-C_6H_5$ | H | " |
| 218 | 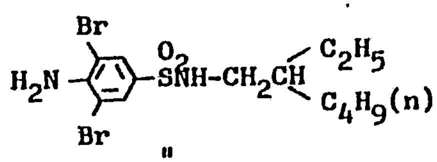 | $(CH_2)_3OC_2H_5$ | $(CH_2)_3OC_2H_5$ | gelborange |
| 219 | " | $(CH_2)_3OCH_3$ | $(CH_2)_3OCH_3$ | " |
| 220 | " | $(CH_2)_3O(CH_2)_2OC_6H_5$ | H | goldgelb |
| 221 | " | $(CH_2)_2C_6H_5$ | H | " |
| 222 | " | $CH_2CH(CH_3)C_6H_5$ | H | " |
| 223 | " | $(CH_2)_2C_6H_5$ | $(CH_2)_2C_6H_5$ | gelborange |

| Bsp. | $H_2N$-D | $B_1$ | $B_3$ | Farbton auf PES, BW sowie Mischgewebe |
|---|---|---|---|---|
| 224 | 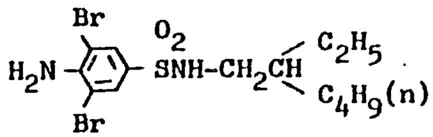 | $(CH_2)_2OCH_3$ | $(CH_2)_2OCH_3$ | gelborange |
| 225 | " | $(CH_2)_2OC_4H_9(n)$ | $(CH_2)_2OC_4H_9(n)$ | gelborange |
| 226 | 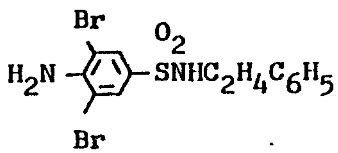 | $(CH_2)_3OCH_3$ | $(CH_2)_3OCH_3$ | gelborange |
| 227 | " | $(CH_2)_3OC_2H_5$ | $(CH_2)_3OC_2H_5$ | gelborange |
| 228 | " | $(CH_2)_2OC_4H_9(n)$ | $(CH_2)_2OC_4H_9(n)$ | gelborange |
| 229 | " | $(CH_2)_2OCH_3$ | $(CH_2)_2OCH_3$ | gelborange |
| 230 | " | $(CH_2)_3O(CH_2)_2OC_6H_5$ | H | goldgelb |

| Bsp. | $H_2N-D$ | $B_1$ | $B_3$ | Farbton auf PES, BW sowie Mischgewebe |
|---|---|---|---|---|
| 231 | 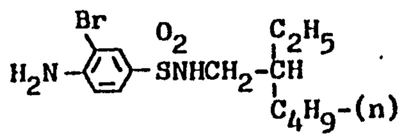 | $(CH_2)_3OCH_3$ | $(CH_2)_3OCH_3$ | gelborange |
| 232 | " | $C_2H_4C_6H_5$ | H | goldgelb |
| 233 | 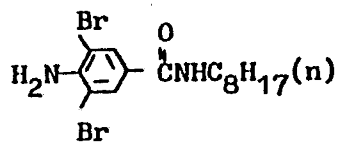 | $(CH_2)_2OCH_3$ | $(CH_2)_2OCH_3$ | gelborange |
| 234 | " | $(CH_2)_2C_6H_5$ | $(CH_2)_2C_6H_5$ | " |
| 235 | " | $(CH_2)_3OCH_3$ | $(CH_2)_3OCH_3$ | " |
| 236 | " | $C_2H_4C_6H_5$ | H | goldgelb |
| 237 | " | $(CH_2)_2O(C_4H_9)-(n)$ | " | " |
| 238 | " | $(CH_2)_3O(CH_2)_2OC_6H_5$ | H | " |

| Bsp. | $H_2N-D$ | $B_1$ | $B_3$ | Farbton auf PES, BW sowie Mischgewebe |
|---|---|---|---|---|
| 239 | 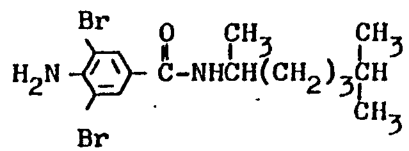 | $(CH_2)_2OCH_3$ | $(CH_2)_2OCH_3$ | gelborange |
| 240 | " | $(CH_2)_2C_6H_5$ | $(CH_2)_2C_6H_5$ | " |
| 241 | " | $(CH_2)_3OCH_3$ | $(CH_2)_3OCH_3$ | " |
| 242 | " | $C_2H_4C_6H_5$ | H | goldgelb |
| 243 | " | $(CH_2)_3O(CH_2)_2OC_6H_5$ | H | " |
| 244 | 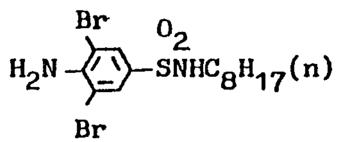 | $(CH_2)_2OCH_3$ | $(CH_2)_2OCH_3$ | gelborange |
| 245 | " | $(CH_2)_3OCH_3$ | $(CH_2)_3OCH_3$ | " |
| 246 | " | $C_2H_4C_6H_5$ | $C_2H_4C_6H_5$ | " |

| Bsp. | $H_2N$-D | $B_1$ | $B_3$ | Farbton auf PES, BW sowie Mischgewebe |
|---|---|---|---|---|
| 247 | 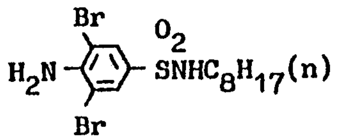 | $C_2H_4C_6H_5$ | H | goldgelb |
| 248 | " | $(CH_2)_3O(CH_2)_2OC_6H_5$ | H | " |
| 249 | 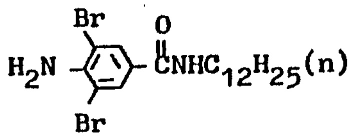 | $(CH_2)_2OCH_3$ | $(CH_2)_2OCH_3$ | gelborange |
| 250 | " | $(CH_2)_3OCH_3$ | $(CH_2)_3OCH_3$ | " |
| 251 | " | $C_2H_4C_6H_5$ | H | goldgelb |
| 252 | " | $(CH_2)_3OCH_3$ | H | " |

| Bsp. | $H_2N$-D | $B_1$ | $B_3$ | Farbton auf PES, BW sowie Mischgewebe |
|---|---|---|---|---|
| 253 | 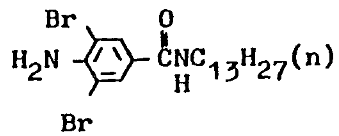 | $(CH_2)_2OCH_3$ | $(CH_2)_2OCH_3$ | gelborange |
| 254 | " | $(CH_2)_3OCH_3$ | $(CH_2)_3OCH_3$ | " |
| 255 | " | $C_2H_4C_6H_5$ | H | goldgelb |
| 256 | " | $(CH_2)_2OCH_3$ | H | " |
| 257 | " | $(CH_2)_3OCH_3$ | H | " |
| 258 | 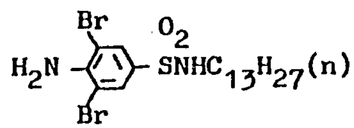 | $(CH_2)_2OCH_3$ | $(CH_2)_2OCH_3$ | gelborange |
| 259 | " | $(CH_2)_3OCH_3$ | $(CH_2)_3OCH_3$ | " |
| 260 | " | $(CH_2)_3OCH_3$ | H | goldgelb |

0023315

| Bsp. | $H_2N-D$ | $B_1$ | $B_3$ | Farbton auf PES, BW sowie Mischgewebe |
|---|---|---|---|---|
| 261 | 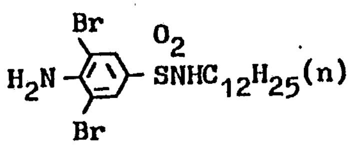 | $(CH_2)_2OCH_3$ | $(CH_2)_2OCH_3$ | gelborange |
| 262 | " | $(CH_2)_3OCH_3$ | $(CH_2)_3OCH_3$ | " |
| 263 | " | $(CH_2)_3OCH_3$ | H | goldgelb |
| 264 | " | $C_2H_4C_6H_5$ | H | " |
| 265 | 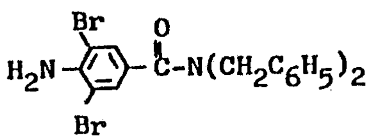 | $(CH_2)_3OCH_3$ | $(CH_2)_3OCH_3$ | gelborange |
| 266 | " | $(CH_2)_2OCH_3$ | $(CH_2)_2OCH_3$ | " |
| 267 | 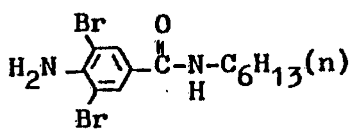 | $C_2H_4C_6H_5$ | $C_2H_4C_6H_5$ | gelborange |
| 268 | " | " | H | goldgelb |

| Bsp. | $H_2N$-D | $B_1$ | $B_3$ | Farbton auf PES, BW sowie Mischgewebe |
|---|---|---|---|---|
| 269 | 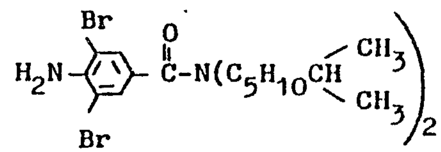 | $(CH_2)_2OCH_3$ | $(CH_2)_2OCH_3$ | gelborange |
| 270 | 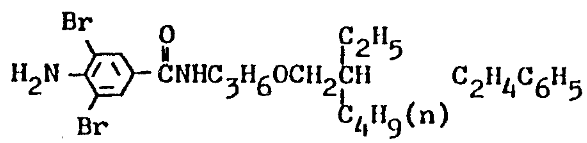 | $C_2H_4C_6H_5$ | H | goldgelb |
| 271 | " | $(CH_2)_2OCH_3$ | H | " |
| 272 | 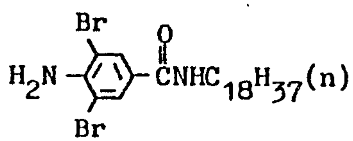 | $(CH_2)_2OCH_3$ | H | goldgelb |
| 273 | " | $(CH_2)_3OCH_3$ | H | " |

| Bsp. | $H_2N-D$ | $B_1$ | $B_3$ | Farbton auf PES, BW sowie Mischgewebe |
|---|---|---|---|---|
| 274 | 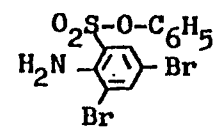 | $C_2H_4C_6H_5$ | $C_2H_4C_6H_5$ | gelborange |
| 275 | " | " | H | goldgelb |
| 276 | 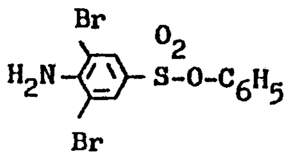 | $C_2H_4C_6H_5$ | $C_2H_4C_6H_5$ | gelborange |
| 277 | " | " | H | goldgelb |
| 278 | 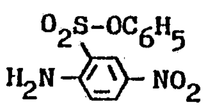 | $(CH_2)_3OCH_3$ | $(CH_2)_3OCH_3$ | rot |
| 279 | " | $(CH_2)_2OC_4H_9(n)$ | $(CH_2)_2OC_4H_9(n)$ | rot |

| Bsp. | $H_2N-D$ | $B_1$ | $B_3$ | Farbton auf PES, BW sowie Mischgewebe |
|---|---|---|---|---|
| 280 | 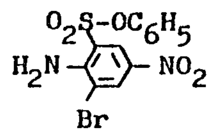 | $(CH_2)_3OCH_3$ | $(CH_2)_3OCH_3$ | rot |
| 281 | " | $(CH_2)_2OC_4H_9(n)$ | $(CH_2)_2OC_4H_9(n)$ | rot |
| 282 | " | $C_2H_4C_6H_5$ | H | rot |
| 283 | 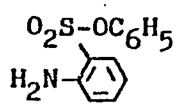 | $C_2H_4OC_4H_9(n)$ | $C_2H_4C_6H_5$ | goldgelb |
| 284 | " | $C_2H_4C_6H_5$ | H | " |
| 285 | " | $C_3H_6OC_2H_4OC_6H_5$ | H | " |
| 286 | " | " | $C_3H_6OC_2H_4OC_6H_5$ | " |
| 287 | " | $C_2H_4C_6H_{11}$ | $C_2H_4C_6H_{11}$ | " |

| Bsp. | $H_2N$-D | $B_1$ | $B_3$ | Farbton auf PES, BW sowie Mischgewebe |
|---|---|---|---|---|
| 288 | 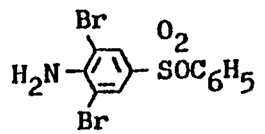 | $(CH_2)_3OCH_3$ | $(CH_2)_3OCH_3$ | orange |
| 289 | " | $(CH_2)_3OC_4H_9(n)$ | $(CH_2)_3OC_4H_9(n)$ | " |
| 290 | " | $-CH_2CH(CH_3)-C_6H_5$ | H | " |
| 291 | " | $(CH_2)_2OC_4H_9(n)$ | H | " |
| 292 | 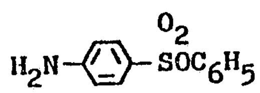 | $(CH_2)_3O(CH_2)_2OC_6H_5$ | H | goldgelb |
| 293 | " | $(CH_2)_2C_6H_5$ | H | " |

| Bsp. | $H_2N$-D | $B_1$ | $B_3$ | Farbton auf PES, BW sowie Mischgewebe |
|---|---|---|---|---|
| 294 | 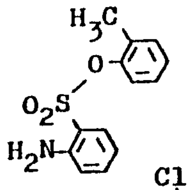 | $(CH_2)_3O(CH_2)_2OC_6H_5$ | H | goldgelb |
| 295 | 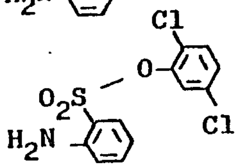 | $(CH_2)_3O(CH_2)_2OC_6H_5$ | H | " |
| 296 | 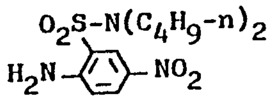 | $C_2H_4C_6H_5$ | H | scharlach |
| 297 | " | " | $C_2H_4C_6H_5$ | rot |
| 298 | 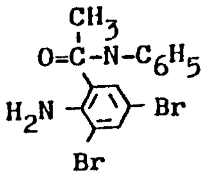 | $C_2H_4C_6H_5$ | H | goldgelb |
| 299 | " | $(CH_2)_3O(CH_2)_2OC_6H_5$ | H | " |

| Bsp. | $H_2N$-D | $B_1$ | $B_3$ | Farbton auf PES, BW sowie Mischgewebe |
|---|---|---|---|---|
| 300 | 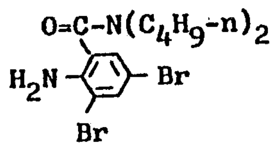 | $(CH_2)_3O(CH_2)_2OC_6H_5$ | H | goldgelb |
| 301 | " | $C_2H_4C_6H_5$ | H | " |
| 302 | 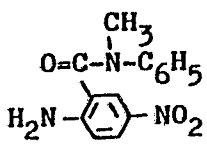 | $C_2H_4C_6H_5$ | H | scharlach |
| 303 | " | " | $C_2H_4C_6H_5$ | rot |
| 304 | 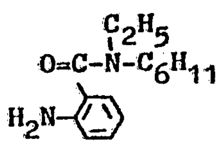 | $(CH_2)_3O(CH_2)_2OC_6H_5$ | H | goldgelb |

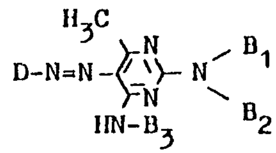

| Bsp. | $H_2N-D$ | $B_1 = B_2$ | $B_3$ | Farbton |
|---|---|---|---|---|
| 305 | 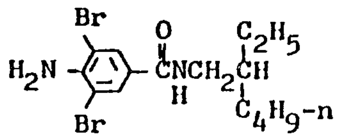 | $C_4H_9$-n | $C_6H_5$ | goldgelb |
| 306 | " | " | $C_3H_6OCH_3$ | " |
| 307 | " | $CH_3$ | $C_2H_4OC_4H_9$-n | " |
| 308 | 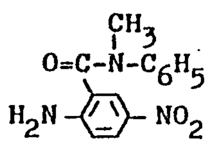 | $C_4H_9$-n | $C_3H_6OCH_3$ | scharlach |
| 309 | " | " | $C_3H_6O-CH_2-C_6H_5$ | " |

| Bsp. | $H_2N-D$ | $B_1 = B_2$ | $B_3$ | Farbton |
|---|---|---|---|---|
| 310 | 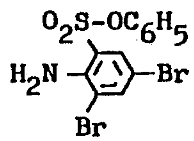 | $CH_3$ | $C_2H_4C_6H_5$ | goldgelb |
| 311 | " | $C_4H_9$-n | $C_2H_4C_6H_5$ | " |
| 312 | " | " | $C_3H_6OCH_3$ | " |
| 313 | 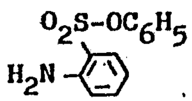 | " | $C_2H_4C_6H_5$ | " |
| 314 | 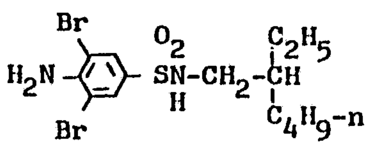 | $C_4H_9$-n | $C_3H_6OCH_3$ | goldgelb |
| 315 | " | " | $C_2H_4C_6H_5$ | " |
| 316 | " | " | $CH_2C_6H_5$ | " |

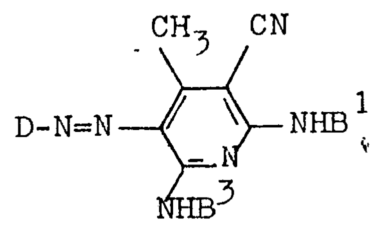

| Bsp. | D | $B^1$ | $B^3$ | Farbton |
|---|---|---|---|---|
| 317 | 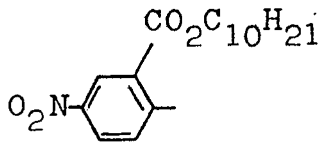 | $(CH_2)_3OCH_3$ | $CH(CH_3)_2$ | rot |
| 318 | 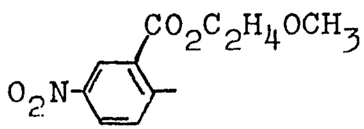 | " | " | " |
| 319 | 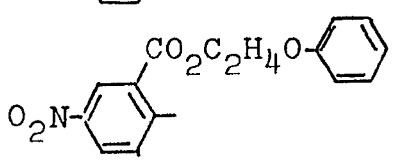 | " | " | " |
| 320 | 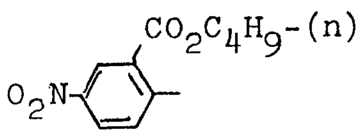 | " | " | " |
| 321 | 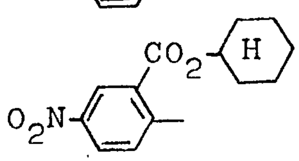 | " | " | " |

| Beisp. | D | $B^1$ | $B^3$ | Farbton |
|---|---|---|---|---|
| 322 | 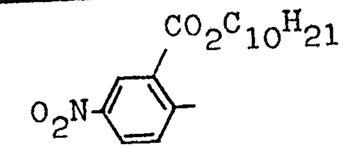 | $CH(CH_3)_2$ | $CH(CH_3)_2$ | rot |
| 323 | 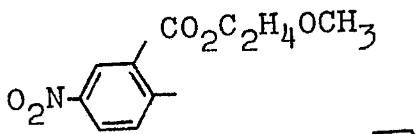 | " | " | " |
| 324 | 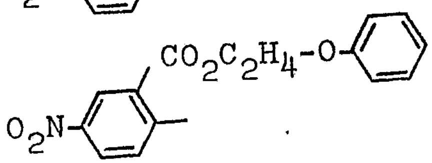 | " | " | " |
| 325 | 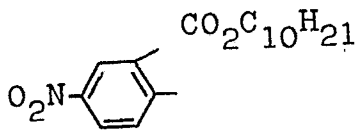 | 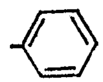 | " | " |
| 326 | 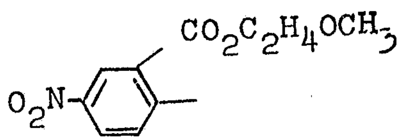 | " | " | " |
| 327 | 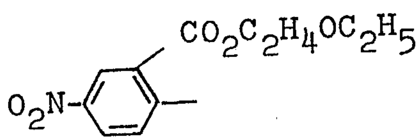 | " | " | " |
| 328 | 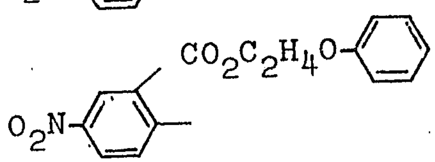 | " | " | " |

| Beisp. | D | $B^1$ | $B^3$ | Farbton |
|---|---|---|---|---|
| 329 | 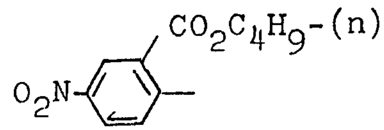 | 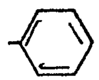 | $CH(CH_3)_2$ | rot |
| 330 | 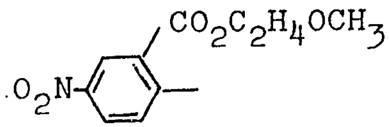 | 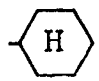 | " | " |
| 331 | 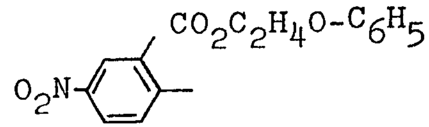 | " | " | " |
| 332 | 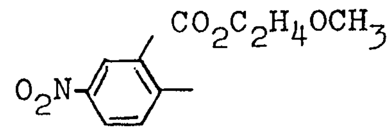 | 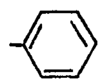 | 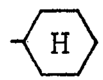 | " |
| 333 | " | 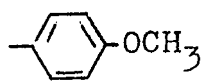 | $CH(CH_3)_2$ | " |
| 334 | " | " | 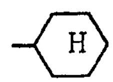 | " |

## Patentansprüche

1. Verfahren zum Färben und Bedrucken von cellulosehaltigem Textilmaterial, dadurch gekennzeichnet, daß man als Farbstoffe Verbindungen der allgemeinen Formel I

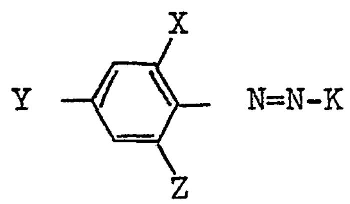 I

verwendet, in der
K ein Rest der Formel

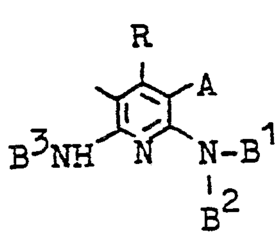 oder 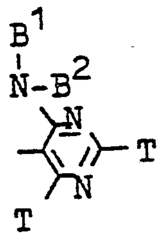 ,

einer der Reste
X oder Y eine $C_2$- bis $C_{19}$-Carbonester-, $C_3$- bis $C_{19}$-Carbonamid-, $C_4$- bis $C_{18}$-Sulfonamid-, $C_4$- bis $C_8$-Alkylsulfon-, $C_6$- bis $C_8$-Arylsulfon- oder eine Sulfonsäurearylestergruppe und die restlichen Substituenten
X, Y und Z Wasserstoff, Brom oder Methyl und
Y darüberhinaus auch Nitro sind, wobei
Y Cyan oder Carbamoyl,
$B^1$, $B^2$ und $B^3$ unabhängig voneinander einen aliphatischen, cycloaliphatischen, araliphatischen oder aromatischen Rest,
$N-B^1$ / $B^2$ einen gesättigten heterocyclischen Rest,

R Wasserstoff oder $C_1$- bis $C_3$-Alkyl, einer der Reste T einen Rest der Formel $-\underset{B^2}{\underset{|}{N}}-B^1$ und der andere Rest T Wasserstoff, $C_1$- bis $C_4$-Alkyl oder Phenyl bedeuten.

2. Verfahren gemäß Anspruch 1, dadurch gekennzeichnet, daß man als Farbstoffe Verbindungen der allgemeinen Formel

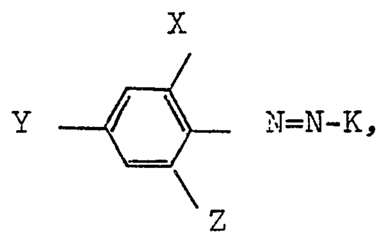,

verwendet, wobei K einen Rest der Formeln

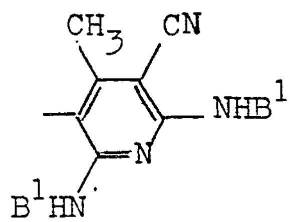, 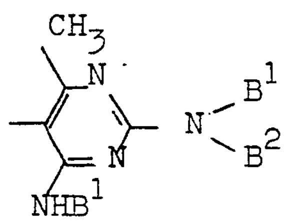 oder

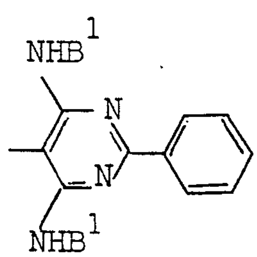,

einer der Reste X oder Y eine $C_2$- bis $C_{19}$-Carbonester- oder $C_3$- bis $C_{19}$-Carbonamidgruppe und die beiden verbleibenden Reste X und Z oder Y und Z Brom oder X eine $C_2$- bis $C_{19}$-Carbonester oder $C_3$- bis $C_{19}$-Carbonamidgruppe, Y Nitro und Z Wasserstoff,

$B^1$ Wasserstoff, $C_1$- bis $C_8$-Alkyl, Allyl, durch $C_1$- bis $C_4$-Alkoxy, Phenoxy, Phenoxyäthoxy oder Phenyl substituiertes $C_1$- bis $C_3$-Alkyl, $C_5$- bis $C_{12}$-Polyalkoxyalkyl, Cyclohexyl oder gegebenenfalls substituiertes Phenyl,

$B^2$ Wasserstoff oder einen Rest $B^1$ und

$B^1$ und $B^2$ zusammen mit dem Stickstoff einen gesättigten 5- bis 7-Ring bedeuten.

3. Verfahren gemäß Anspruch 1, <u>dadurch gekennzeichnet</u>, daß man Farbstoffe der Formeln

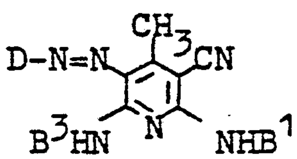 ,

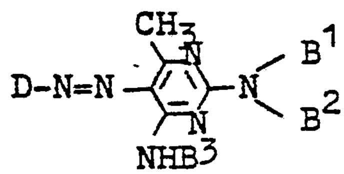 oder

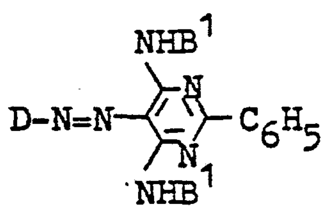

verwendet, wobei $B^1$, $B^2$ und $B^3$ die angegebene Bedeutung haben und D ein Rest der Formeln

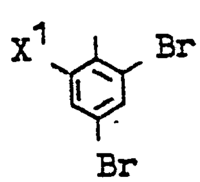 ,

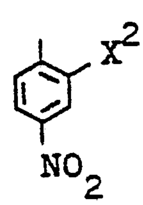 oder

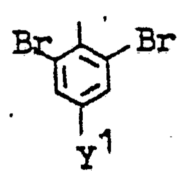 ist,

in denen

$X^1$ ein $C_4$- bis $C_{19}$-Carbonester-, $C_4$- bis $C_{19}$-Carbonamid- oder eine Sulfonsäurephenylestergruppe,

$X^2$ eine $C_4$- bis $C_{19}$-Carbonester- oder $C_4$- bis $C_{19}$-Carbonamidgruppe und

$Y^1$ eine $C_4$- bis $C_{19}$-Carbonester-, $C_4$- bis $C_{19}$-Carbonamid-, $C_6$- bis $C_{18}$-Sulfonamid- oder gegebenenfalls durch Chlor oder Methyl substituierte Sulfonsäurephenylestergruppe bedeuten.

0023315

Europäisches Patentamt

# EUROPÄISCHER RECHERCHENBERICHT

Nummer der Anmeldung

EP 80 10 ....

| EINSCHLÄGIGE DOKUMENTE | | | KLASSIFIKATION DER ANMELDUNG (Int Cl) |
|---|---|---|---|
| Kategorie | Kennzeichnung des Dokuments mit Angabe, soweit erforderlich der maßgeblichen Teile | betrifft Anspruch | |
| X | DE - A - 2 715 984 (BASF)<br>* Seiten 1,2, ganz; Seite 15, Absatz 2; Seite 16, Absätze 1,2; Seite 30, Zeilen 4-9; Seite 31, Beispiel 32; Seite 34, Beispiele 56,58,59; Seite 40, Beispiel 84; Seite 43, Beispiele 103, 104 *<br>-- | 1 | D 06 P 1/18<br>3/60<br>3/85 |
| X | US - A - 4 150 943 (BASF)<br>* Spalte 1 bis Spalte 5, ganz; Spalten 23/24, Beispiele 82, 84, 85; Spalten 27-42; Beispiele 100, 102,106,107,124,126,135,141, 150,151,161,162,172,173,184,185; Spalten 45/46, Beispiele 202-208; Spalten 59/60, Beispiele 340-343; Spalten 63/64, Beispiel 365 *<br>---- | 1 | RECHERCHIERTE SACHGEBIETE (Int Cl)<br>D 06 P 1/18<br>3/60<br>3/85<br>C 09 B 29/42<br>29/52<br>29/36 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 29-10-1980 | GREEN |